# EUROPEAN PATENT SPECIFICATION

(11) **EP 2 391 155 B1**
(45) Date of publication and mention of the grant of the patent: **13.02.2013**
(21) Application number: 10290282.2
(22) Date of filing: 27.05.2010
(51) Int. Cl.: H04W 24/02, H04W 64/00, H04W 84/04, H04L 12/24, H04W 60/00

(54) **A femtocell base station and method of determining a macrocell location area within which a femtocell base station resides**
Femtozelle-Basisstation und Verfahren zur Bestimmung eines Makrozellen-Standortgebiets, in dem eine Femtozelle-Basisstation liegt
Station de base à femtocellules et procédé de détermination de la région d'emplacement de macrocellules dans laquelle se trouve la station de base à femtocellules

(43) Date of publication of application: 30.11.2011
(73) Proprietor: Alcatel Lucent, 75007 Paris (FR)
(72) Inventor: Sapiano, Philip C., Corsham, SN13 9AY Wiltshire (GB); Skeates, Mark T., Bath, BA1 4PA Somerset (GB); Brend, Graham R., Bath, BA1 7UE Somerset (GB); Putman, Tony, Chippenham, SN15 5AQ (GB)
(74) Representative: Sarup, David Alexander

(56) References cited:
- WO-A1-2009/000790
- US-A1- 2009 265 542
- "Universal Mobile Telecommunications System (UMTS); UTRAN architecture for 3G Home Node B (HNB); Stage 2 (3GPP TS 25.467 version 9.2.0 Release 9)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 3, no. V9.2.0, 1 April 2010 (2010-04-01), XP014046615

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building. Femtocell base stations are sometimes referred to as femtos.

A femtocell base station is of a relatively low transmit power and hence each femtocell is of a small coverage area compared to a macrocell. A typical coverage range is tens of metres.

Femtocell base stations have auto-configuring and self-optimising capabilities so as to enable plug-and-play deployment by owners, where the femtocell base stations may automatically integrate themselves into an existing macrocell network.

Femtocell base stations are intended primarily for users belonging to a particular home or office. Femtocell base stations may be private access, public access, or hybrid access. In femtocell base stations that are private access, access is restricted to only registered users, for example family members or particular groups of employees. In femtocell base stations that are public access, any users may use the femtocell base station. In hybrid access, any user may be granted access but access is granted preferentially to registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications.

In order to be integrated with a macrocell network, femtocell base stations may exchange signalling messages with various network elements within the (second generation/ 2.5 generation(2.5G) /third generation) macrocell network. This signalling is compliant with the relevant Third Generation Partnership Project (3GPP) Standard, such that femtocells appear as one or more 3GPP compliant nodes. To achieve this, femtocell base stations are grouped into clusters, each cluster being connected via a gateway, known as a femto-gateway, to the macrocell network. The femto-gateway terminates the signalling between core network elements in the macrocell network and the femtocell cluster, thereby enabling the whole cluster of femtocells to appear as a single virtual radio network controller (RNC), in accordance with 3GPP standards.

Background is provided by United States Patent Publication US2009/265542 and Universal Mobile Telecommunications System (LTMTS); UTRAN architecture for 3G Home Node B (HNB); Stage 2 (3GPP TS 25.467 version 9.2.0 Release 9) "Technical Specification, European Telecommunications Standards Institute (ETSI), 650, Route des Lucioles; F-06921 Sophia-Antipolis; France, vol. 3FPP RAN 3, no. V9.2.0, 1 April 2010 (2010-04-01), XP014046615. It is known from US2009/265542 to provide a method of determining a macrocell location area within which a femtocell base station resides, the method comprising:
the femtocell base station monitoring messages received from user terminals connected by radio to the femtocell base station to detect a location area update request, the location area update request including an identifier of which macrocell location area the user terminal was last connected to before connection with the femtocell base station,
the femtocell base station decoding the location area update request to determine the macrocell location area identifier,
in which the femtocell base station receives further location area update requests indicating that the femtocell base station is in the vicinity of other macrocell location areas and upon reception of said further location area update requests checks whether the macrocell location area identified for the femtocell base station is the most suitable.

### Summary

The present invention is characterised over the disclosure of US2009/265542 in that the femtocell base station is temporarily registered to a femto-gateway covering none of the location areas identified in the location area update requests, and the macrocell location area most frequently identified from the location area update requests gathered in that time is selected as the one to use in determining the femto-gateway to which the femtocell base station is to register.

The reader is referred to the appended independent claims. Some preferred features are laid out in the dependent claims.

An example of the present invention is a method of determining a macrocell location area within which a femtocell base station resides, the method comprising: the femtocell base station monitoring messages received from user terminals connected by radio to the femtocell base station to detect a location area update request, the location update request including an identifier of which macrocell location area the user terminal was last connected to before connection with the femtocell base station, the femtocell base station decoding the location update request to determine the macrocell location area identifier.

In some preferred embodiments, a femtocell base station, such as a small cell, uses the macrocell location area identifier to automatically select the most suitable femto-gateway to connect to. Preferred embodiments advantageously provide a robust, direct and accurate approach to determining which femto-gateway to connect to.

In another aspect, the present invention also relates to corresponding apparatus.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating the association of femtocells to three femto-gateways in the network shown in Figure 1,
Figure 3 is a diagram illustrating association of Location Areas to Radio Network Controllers and a femto-gateway in the network shown in Figures 1 and 2,
Figure 4 is a diagram illustrating the three femto-gateways and an example connected femto,
Figure 5 is a diagram illustrating further details of the femto shown in Figure 4,
Figure 6 is a message sequence diagram illustrating a location updating procedure in the circuit-switched domain of the network,
Figure 7 is a message sequence diagram illustrating a location updating procedure (routing area update) in the packet-switched domain of the network, and
Figure 8 is a message sequence diagram illustrating reassignment of a femto from one femto-gateway to another.

### Detailed Description

We now describe a network including femtocell base stations then look in greater detail at a technical problem identified by the inventors and its solution in an example embodiment of the present invention.

### Network

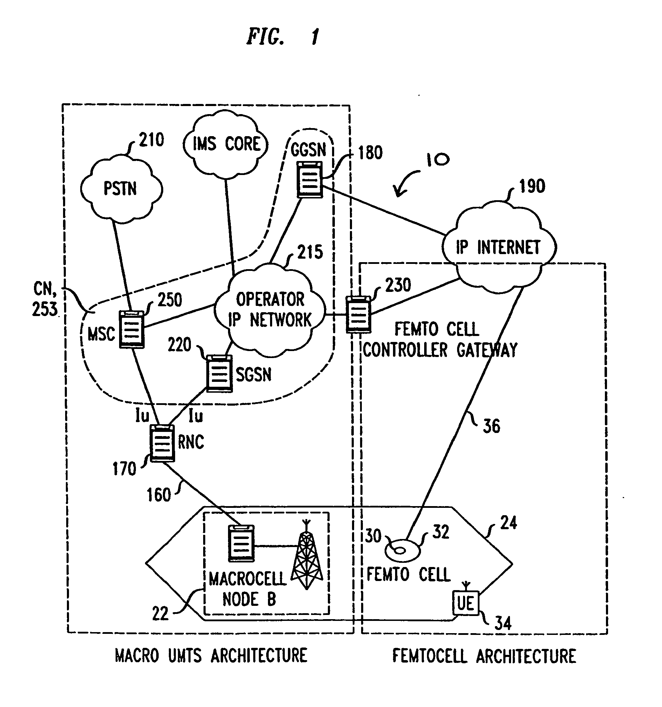

As shown in Figure 1, a network 10 for wireless communications, through which a user terminal 34 may roam, includes two types of base station, namely macrocell base stations and femtocell base stations (the latter being sometimes called "femtos"). One macrocell base station 22 is shown in Figure 1 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with serving general packet radio service support nodes (SGSNs) 220 and a gateway general packet radio support node (GGSN) 180. The GGSN then communicates with a packet-switch core 190 such as, for example, the Internet.

The MSC 250 , SGSN 220, GGSN 180 and operator IP network 215 constitute a so-called core network 253. The SGSN 220 and GGSN 180 are connected by an operator IP network 215 to femtocell controller/gateways 230 (one of which is shown for simplicity).

Each femtocell controller/gateway 230 is connected via the Internet 190 to the femtocell base stations such as denoted 30. These connections to the femtocell controller/gateway 230 are broadband Internet Protocol connections ("backhaul") connections.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 1, the user of mobile terminal 34 is a preferred user of the nearest of the femtocells 32.

### Multiple femto-gateways

The inventor realised that there are several reasons why more than one femto-gateway is required within a network. One reason is that when the number of femtos is large, several femto-gateways are required to handle the processing load. In that case, it is necessary to have the femto-gateways organised such that the cluster of femtocells of each femto-gateway serves distinct underlying macrocells.

This is partly because macrocell to femtocell handovers, of user terminals compliant with PreRelease 9 versions of the 3GPP Standard, require that femto-gateways do not overlap in the macrocellular RNC areas that the femto-gateways cover. Another reason to organise the femto-gateways such that the cluster of femtocells of each femto-gateway serves distinct underlying macrocells is to optimise signalling load in the core network 253. Specifically, cell reselection between macrocell and femtocell, via a Location Update procedure, is handled by an MSC handling the location update locally when the femto-gateway is directed to the same MSC as the underlying macrocell. This is in contrast to when the macrocell and femto-gateway are directed to different MSCs causing inter-MSC interactions.

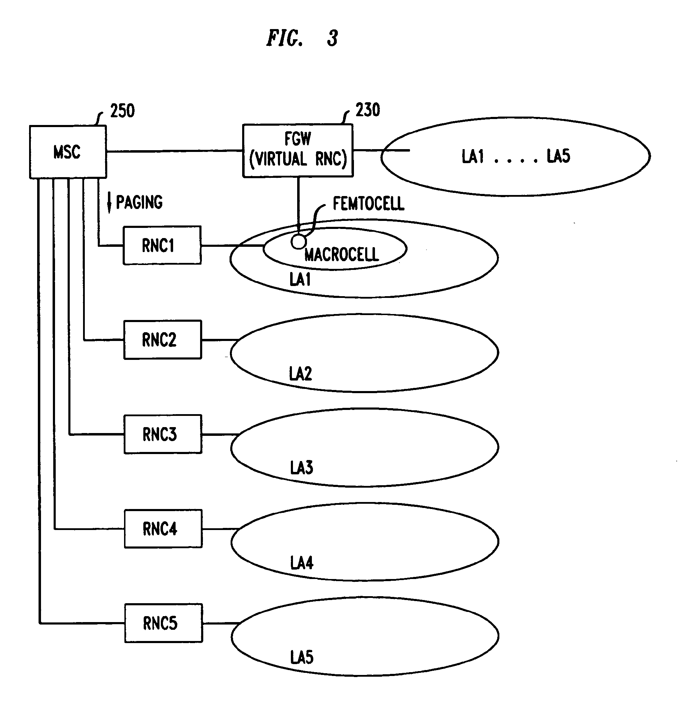

A second reason that more than one femto-gateway is required is that when deploying femtos that are in open-access mode in public areas, it is desirable to align the location areas covered by each cluster of femtos to the location areas of the macrocellular network. This is in order to reduce the load on the core network 253 due to signalling. An example is shown in Figure 3, in which a single femto-gateway 230 covers location areas denoted Location Area code 1 to Location Area code 5. The femtos in the cluster connected to this femto-gateway are dispersed within macrocells, each macrocell being dispersed among the five location areas, LAC1 To LAC5.

As the location areas of a femto and macrocell in which it resides are the same, there is no need to perform a location area update upon a user terminal reselection from macrocell to femtocell, or femtocell to macrocell. However, because each femtocell shares the same location area as the macrocell within which it resides, there are issues with other network procedures. Specifically, when a user terminal is paged by the core network, the core network uses location areas to determine which cells to send paging messages to for broadcast. As the femtos and macrocell base stations share location areas, paging messages for the macrocells in a specific location area are also forwarded to the femto-gateway, as the femto-gateway also covers that same location area. This causes a high number of signalling messages to femtos via the femto-gateway. To keep this number manageable, each femto-gateway must cover a limited number of macrocell location areas (in this example five) so multiple femto-gateways are required. Typically an RNC serves some hundreds of macrocells, whilst a femto-gateway serves thousands to tens of thousands of femtos so covers multiple location areas.

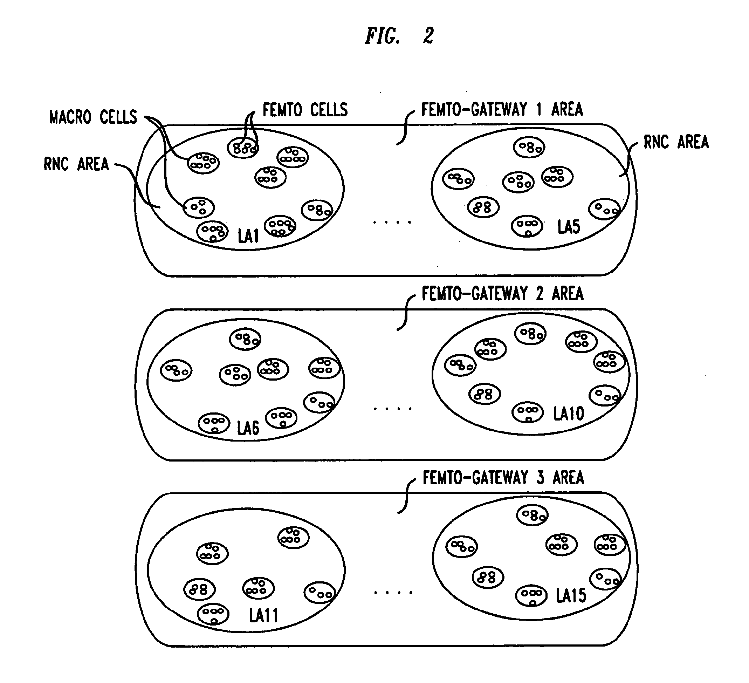

As shown in Figure 2, each femto-gateway is assigned femtos, also referred to as small cells, within macrocells that are within Location areas. In this example, each Location area is defined so as to be handled by a single respective RNC. As shown in -Figure 2, a first femto-gateway, covers femtos within Location Areas LA1 to LA5. A second femto-gateway covers femtos within Location Areas LA6 to LA10. A third femto-gateway, covers femtos within Location Areas LA11 to LA15.

Figure 3 is an alternative illustration of part of the scenario shown in Figure 2. As shown in Figure 3, one femto-gateway 230 is configured to serve multiple RNC coverage areas of the macrocellular network, in this example RNC1 to RNCS, each having a respective Location Area (LA1 to LA5). These RNCs are assigned to a single MSC 250.

The inventor realised that as femtos may be deployed in any part of a country, identifications of which femto-gateway a femto should be connected to is a technically challenging problem. The inventors developed various approaches to address this as explained below.

### Femto using Location Area Updates to select which femto-gateway to connect to

Upon a user terminal that is in idle mode moving, and so reselecting, in other words connecting, to a new cell, the user terminal decodes the Location Area identifier (LA1) broadcast by the new cell and determines whether the LAI has changed from when the user terminal last registered with the core network. The Location Area identifier is broadcast by the new cell in system information broadcasts.

We use the term Location Area identifier generically to mean a Location Area identifier when the connection is of circuit-switched type and a Routing Area identifier when the connection is of packet -switched type. Location area identifiers are sometimes known as location area codes.

Assuming the LAI has changed, the user terminal informs the core network using a Location Area Update procedure that includes a Location Updating request (in the Circuit-switched domain) or a Routing Area Update request (in the Packet-switched domain). In the request, the user terminal includes the previous Location Area identifier in order for the core network to retrieve information about the user terminal from the core network node (MSC or SGSN) associated with the previous location area. _________

Importantly, the femto uses information from the location area update procedure to determine macrocellular location area and hence which femto-gateway to connect to. This is explained in more detail below.

### Initial Assignment to a Femto-Gateway

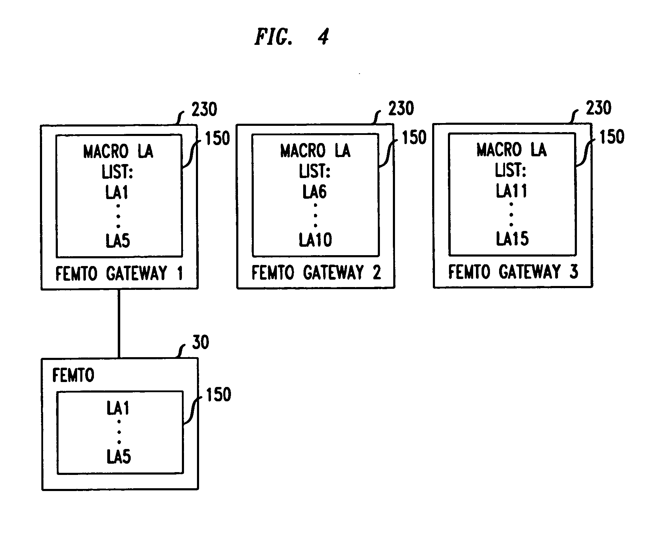

As shown in Figure 4, each femto-gateway 230 includes a list 150 of the macrocellular location areas that that femto-gateway serves. A femto 30 is provided with this list 150 either by being pre-provisioned with that information before deployment or by querying a central database or default gateway (not shown).

The femto 30 then makes an initial determination of which femto-gateway on the list to configure itself to by network-listening, namely decoding the broadcast cell of the macrocell in which it resides and extracting location information (namely a macrocell location area identifier) from that. In an alternative embodiment, the femto is simply instructed which femto-gateway to initially attach to by being pre-provisioned with that information before deployment, for example a femto is instructed to use initially a default femto-gateway that is lightly-loaded, for reasons of load balancing.

### Femto

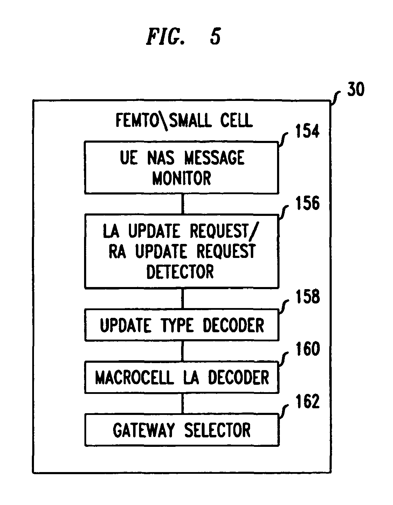

The femto 30 is configured as shown in Figure 5.

As shown in Figure 5, the femto 30 includes a monitor 154 configured to monitor Non-Access Stratum (NAS) messages sent by user terminals connected to a detector 156 of Location updating requests/ routing area update requests. The detector 156 is connected to an update type decoder 158 which is connected to macrocellular Location Area decoder 160. The Location Area decoder 160 is connected to a femto-gateway selector 162.

Upon the detector 156 determining that a NAS message monitored by monitor 154 is a Location updating request or routing area update request, the decoder 158 determines the update type to check that it relates to a geographical update due to user terminal mobility, for example, the update relates to "Normal Location updating", "Routing Area updating" or "combined Location Area/Routing Area updating". If so, the "old location area" indicated in the message is taken as the Location Area of the underlying macrocell.

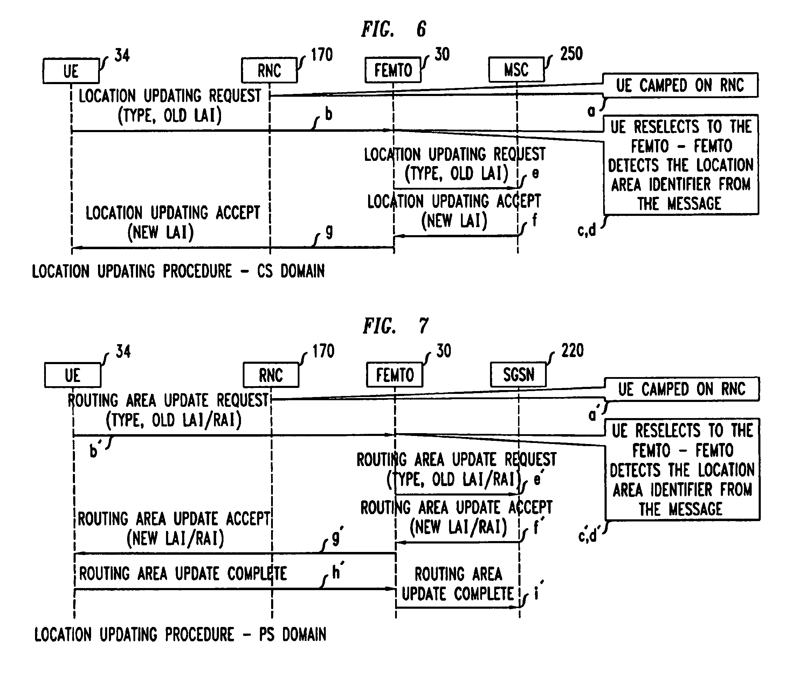

This is shown in more detail in Figures 6 and 7. Figure 6 shows location area updating in the circuit-switched domain. Figure 7 shows location area updating in the packet-switched domain.

### Location Area Updating in Circuit-switched Domain

As shown in Figure 6, the user terminal is initially idle-mode connected (step a) to the RNC. A request for location updating is sent (step b) from the user terminal to the femto. The request includes an indication of update type and the indication of old location area. The femto detects (step c) the macrocellular old location area identifier in the message, and the user terminal reselects to the femto, in other words becomes idle-mode connected (step d) to the femto. The request is then forwarded (step e) by the femto to the MSC. The MSC replies (step f) to the femto with a Location Updating Accept message that includes a new Location Area Identifier(LAI). The femto then forwards (step g) this Accept message to the user terminal.

### Location Area Updating in Packet-switched Domain

As shown in Figure 7, the user terminal is initially idle-mode connected (step a') to the RNC. A routing area update request is sent (step b') from the user terminal to the femto. The request includes an indication of update type and the indication of old routing area (in other words, old location area). The femto detects (step c') the macrocellular old routing/location area identifier (LAI/RAI) in the message, and the user terminal reselects to the femto, in other words becomes idle-mode connected (step d') to the femto. The request is then forwarded (step e') by the femto to the SGSN. The SGSN replies (step f) to the femto with a Routing Area Update Accept message that includes a new Routing/Location Area Identifier(LAI/RAI). The femto then forwards (step g') this Accept message to the user terminal. The user terminal -replies-(step h')-to the femto with a Routing Area Complete message. The femto forwards the Routing Area Complete message to the SGSN.

### Femto-Gateway Reassignment

By such location updating in the PS or CS domain, the femto gets to know the location area identifier of the macrocell in which the femto resides. In this way, the femto gains knowledge to use in selecting which femto-gateway it should be connected to.

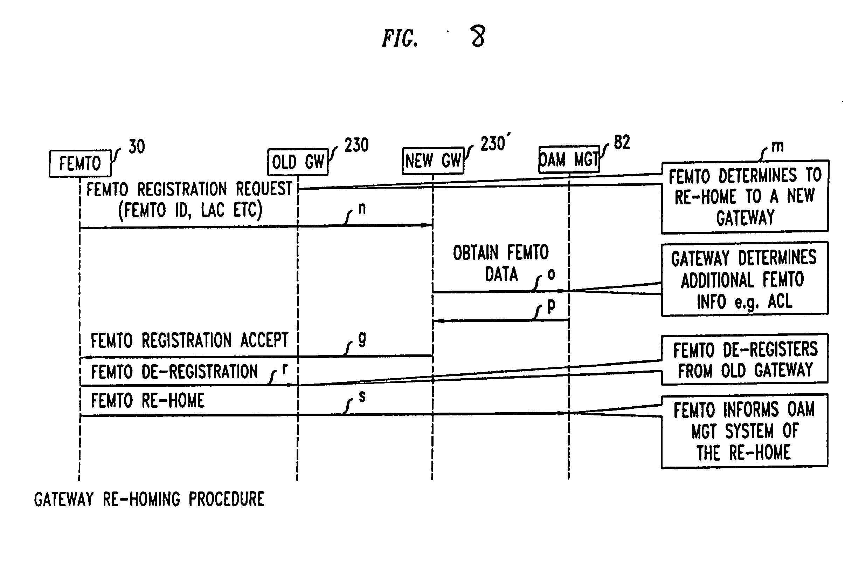

For example a femto can be reassigned to a femto-gateway that has become suitable. For example, referring back to Figures 2 and 3, if Location Area LA2 is identified as the Location Area of the macrocell in which the femto resides, then femto is reassigned to Femto-gatewayl as it covers LA2. An example of this is shown in Figure 8.

As shown in Figure 8, the femto determines (step m), from the "old" location area of the macrocell that is included in the location updating request/routing area update request, that reassignment is required to the femto-gateway 230' covering that location area. Accordingly, the femto sends (step n) to that "new" gateway 230' a femto registration request that includes the femto identifier (FemtoID) and the location area identifier (sometimes referred to as Location area code, LAC). In response, the new gateway requests (step o) further information about the femto from an Operations & Maintenance (OAM) centre 82. The OAM centre responds (step p) with that further information which includes an Access Point Name (APN) Control List (ACL) for example. The new gateway then sends (step q) a femto registration accept message to the femto. In response, the femto sends (step r) a de-registration message to the old femto-gateway, then sends (step s) a message to the OAM centre informing of the reassignment of the femto to the new gateway 230'.

Before that reassignment, further location area updates detected by the femto may confirm the macrocell's location area as being e.g LA2 so act to confirm that the femto-gateway covering LA2 is the best femto-gateway for the femto to be connected to.

### Assignment Re-evaluation

Location area updates only occur upon cell reselection when the "new" location area identified for the femto is different from the "old" location area of the macrocell. In the situation that the femto still detects other location area updates that identify other location areas (of other macrocells), the femto reevaluates its determination of location area and hence femto-gateway. In this example, the femto temporarily uses a location area that is different to that of all macrocell location areas identified in the location area update messages. This causes more location area update requests from user terminals which are monitored by the femto. The Location area most frequently indicated as the "old" location area amongst those monitored is then selected as the one to use in determining the most suitable femto-gateway.

In an otherwise similar embodiment, the femto switches between the more likely location areas and compares the frequency of location area updates, because, as previously mentioned, location area updates only occur upon cell reselection when the "new" location area identified for the femto is different from the "old" location area of the macrocell. For example, the femto can be switched between two different location areas on different days to see which gives rise to fewest location area updates, and so is best.

The present invention may be embodied in other specific forms without departing from its essential characteristics. The described embodiments are to be considered in all respects only as illustrative and not restrictive. The scope of the invention is, therefore, indicated by the appended claims rather than by the foregoing description.

A person skilled in the art would readily recognize that steps of various above-described methods can be performed by programmed computers. Some embodiments relate to program storage devices, e.g., digital data storage media, which are machine -or-computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

### Some Alternative Proposals

Preferred embodiments described above have advantages over some alternative proposals (that are not prior art nor embodiments of the present invention) for determining in which macrocell the femto resides.

Specifically, one alternative proposal that the inventor thought of was for operators to use computer systems to take a post/zip code known for a femto owner and by identifying the geographical location of that code relate it to the known layout of macrocells to determine in which macrocell the femto resides. The computer system then outputs data to configure the femto. This approach has disadvantages of being complex, running contrary to the auto-configuration goals common for femtos, and does not using measured signals from the network so may be inaccurate.

Another alternative proposal that the inventor thought of was for the femto itself to switch to a receive mode and so detect and decode the broadcast channel of the macrocell in order to identify the macrocell. This is known as network listening. This approach also has disadvantages, for example a femto, particular if covering a fairly large coverage area, may detect multiple macrocells but not be able to determine which one provides a dominant signal so is the one in which the femto resides. Another disadvantage is the if the femto is in an area of poor coverage by the macrocellular network it may not be possible to detect any macrocell. A further disadvantage is that the femto listens only in one place. In contrast in some preferred embodiments, the user terminal location updates are advantageously from different places within the femtocell (femtocell base station coverage area).

## Claims

1. A method of determining a macrocell location area (LA) within which a femtocell base station resides, the method comprising:
the femtocell base station (30) monitoring (154) messages received from user terminals connected by radio to the femtocell base station to detect (156) a location area update request, the location area update request including an identifier of which macrocell location area the user terminal was last connected to before connection with the femtocell base station,
the femtocell base station decoding (160) the location area update request to determine the macrocell location area identifier;
in which the femtocell base station receives further location area update requests indicating that the femtocell base station is in the vicinity of other macrocell location areas and upon reception of said further location area update requests checks whether the macrocell location area identified for the femtocell base station is the most suitable;
**characterised in that** the femtocell base station is temporarily registered to a femto-gateway covering none of the location areas identified in the location area update requests, and the macrocell location area most frequently identified from the location area update requests gathered **in that** time is selected as the one to use in determining the femto-gateway to which the femtocell base station is to register.

2. A method according to claim 1, further comprising providing relational information (150) as which macrocell location areas are covered by which femto-gateways (230), and using the macrocell location area identifier together with the relational information to determine the femto-gateway covering that location area.

3. A method according to claim 2 , further comprising the femtocell base station registering (Fig 6:n) with that femto-gateway so that backhaul traffic between the femtocell base station and core network passes via that femto-gateway.

4. A method according to claim 3, in which the femtocell base station de-registers (Fig 6:r) fi-om another femto-gateway to which it was previously assigned.

5. A method according to claim 4, in which the femto-gateway to which the femtocell base station (230) was previously assigned had been selected by the femtocell base station receiving a broadcast signal from a macrocell and decoding the received broadcast signal that includes a macrocell location area identifier, and looking up a list (150) relating macrocell location area identifiers to femto-gateways.

6. A method according to any preceding claim, in which location area update requests are any of location area updating requests in respect of the circuit-switched domain (Fig 6:b) and routing area update requests (Fig 7:b) in respect of the packet-switched domain.

7. A femtocell base station comprising a processor for determining a macrocell location area within which a femtocell base station resides, the processor comprising:
a monitoring stage (154) configured to monitor messages received from user terminals connected by radio to the femtocell base station to detect a location area update request, the location area update request including an identifier of which macrocell location area the user terminal was last connected to before connection with the femtocell base station, and
a decoder (160) configured to decode the location area update request to determine the macrocell location area identifier;
in which the femtocell base station receives further location area update requests indicating that the femtocell base station is in the vicinity of other macrocell location areas and upon reception of said further location area update requests checks whether the macrocell location area identified for the femtocell base station is the most suitable;
**characterised in that** the femtocell base station is temporarily registered to a femto-gateway covering none of the location areas identified in the location area update requests, and the macrocell location area most frequently identified from the location area update requests gathered **in that** time is selected as the one to use in determining the femto-gateway to which the femtocell base station is to register.

8. A femtocell base station according to claim 7, further comprising a memory providing relational information (150) as to which macrocell location areas are covered by which femto-gateways, and a processor (162) configured to use the macrocell location area identifier together with the relational information to determine the femto-gateway covering that location area.

9. A femtocell base station according to claim 8, further comprising means to request registration with the femto-gateway so that, in use, backhaul traffic to and from the femtocell base station passes via that femto-gateway.

10. A femtocell base station according to claim 9, further comprising means to de-register from another femto-gateway.

## Patentansprüche

1. Verfahren zur Bestimmung eines Makrozellen-Standortgebiets (LA), in welchem eine Femtozelle-Basisstation liegt, wobei das Verfahren umfasst:
Überwachen (154), durch die Femtozellen-Basisstation (30), von von Benutzerendgeräten, die über Funk mit der Femtozellen-Basisstation verbunden sind, empfangenen Nachrichten, um eine Standortgebietsaktualisierungsanforderung zu detektieren (156), wobei die Standortgebietsaktualisierungsanforderung eine Kennung des Makrozellen-Standortgebiets, mit welchem das Benutzerendgerät vor der Verbindung mit der Femtozellen-Basisstation zuletzt verbunden war, enthält,
Decodieren (160), durch die Femtozellen-Basisstation, der Standortgebietsaktualisierungsanforderung, um die Makrozellen-Standortgebietskennung zu ermitteln;
wobei die Femtozellen-Basisstation weitere Standortgebietsaktualisierungsanforderungen, welche angeben, dass sich die Femtozellen-Basisstation in der Nähe anderer Makrozellen-Standortgebiete befindet, empfängt und nach Empfang der besagten weiteren Standortgebietsaktualisierungsanforderungen prüft, ob das für die Femtozellen-Basisstation identifizierte Makrozellen-Standortgebiet das geeignetste ist;
**dadurch gekennzeichnet, dass** die Femtozellen-Basisstation vorübergehend bei einem Femto-Gateway, welches keines der in den Standortgebietsaktualisierungsanforderungen identifizierten Standortgebieten abdeckt, angemeldet ist, und das Makrozellen-Standortgebiet, welches am häufigsten aus den zu diesem Zeitpunkt erfassten Standortgebietsaktualisierungsanforderungen identifiziert wird, als das für die Bestimmung des Femto-Gateways, bei welchem sich die Femtozellen-Basisstation anmelden soll, zu verwendende Standortgebiet ausgewählt wird ausgewählt wird.

2. Verfahren nach Anspruch 1, weiterhin umfassend das Bereitstellen von relationalen Informationen (150) darüber, welche Makrozellen-Standortgebiete von welchen Femto-Gateways (230) abgedeckt werden, und das Verwenden der Makrozellen-Standortgebietskennung zusammen mit den relationalen Informationen, um das Femto-Gateway, welches dieses Standortgebiet abdeckt, zu ermitteln.

3. Verfahren nach Anspruch 2, weiterhin umfassend das Anmelden (Fig 6:n) der Femtozellen-Basisstation bei diesem Femto-Gateway, so dass der Backhaul-Verkehr zwischen der Femtozellen-Basisstation und dem Kernnetzwerk durch dieses Femto-Gateway fließt.

4. Verfahren nach Anspruch 3, wobei sich die Femtozellen-Basisstation von einem anderen Femto-Gateway, welchem sie zuvor zugeordnet war, abmeldet (Fig 6:r).

5. Verfahren nach Anspruch 4, wobei das Femto-Gateway, welchem die Femtozellen-Basisstation (230) zuvor zugeordnet war, von der Femtozellen-Basisstation, welche ein Broadcast-Signal von einer Makrozelle empfängt und das empfangene Broadcast-Signal, welches eine Makrozellen-Standortgebietskennung enthält, decodiert und in einer Liste (150), welche Makrozellen-Standortgebietskennungen mit Femto-Gateways in Verbindung bringt, nachsieht, ausgewählt wurde.

6. Verfahren nach einem beliebigen der vorstehenden Ansprüche, wobei die Standortgebietsaktualisierungsanforderungen beliebige Standortgebietsaktualisierungsanforderungen in Bezug auf die leitungsvermittelte Domain (Fig 6:b) und Routinggebietsaktualisierungsanforderungen (Fig 7:b) in Bezug auf die paketvermittelte Domain sind.

7. Femtozellen-Basisstation, umfassend einen Prozessor zum Ermitteln eines Makrozellen-Standortgebiets, in welchem sich eine Femtozellen-Basisstation befindet, wobei der Prozessor umfasst:
Eine Überwachungsstufe (154), konfiguriert für das Überwachen von von Benutzerendgeräten, die über Funk mit der Femtozellen-Basisstation verbunden sind, empfangenen Nachrichten, um eine Standortgebietsaktualisierungsanforderung zu detektieren, wobei die Standortgebietsaktualisierungsanforderung eine Kennung des Makrozellen-Standortgebiets, mit welchem das Benutzerendgerät vor der Verbindung mit der Femtozellen-Basisstation zuletzt verbunden war, enthält,
einen Decoder (160), konfiguriert für das Decodieren der Standortgebietsaktualisierungsanforderung, um die Makrozellen-Standortgebietskennung zu ermitteln;
wobei die Femtozellen-Basisstation weitere Standortgebietsaktualisierungsanforderungen, welche angeben, dass sich die Femtozellen-Basisstation in der Nähe anderer Makrozellen-Standortgebiete befindet, empfängt und nach Empfang der besagten weiteren Standortgebietsaktualisierungsanforderungen prüft, ob das für die Femtozellen-Basisstation identifizierte Makrozellen-Standortgebiet das geeignetste ist;
**dadurch gekennzeichnet, dass** die Femtozellen-Basisstation vorübergehend bei einem Femto-Gateway, welches keines der in den Standortgebietsaktualisierungsanforderungen identifizierten Standortgebieten abdeckt, angemeldet ist, und das Makrozellen-Standortgebiet, welches am häufigsten aus den zu diesem Zeitpunkt erfassten Standortgebietsaktualisierungsanforderungen identifiziert wird, als das für die Bestimmung des Femto-Gateways, bei welchem sich die Femtozellen-Basisstation anmelden soll, zu verwendende Standortgebiet ausgewählt wird.

8. Femtozellen-Basisstation nach Anspruch 7, weiterhin umfassend einen Speicher, welcher relationale Informationen (150) darüber, welche Makrozellen-Standortgebiete von welchen Femto-Gateways abgedeckt werden, bereitstellt, und einen Prozessor (162), welcher für die Verwendung der Makrozellen-Standortgebietskennung zusammen mit den relationalen Informationen konfiguriert ist, um das Femto-Gateway, welches dieses Standortgebiet abdeckt, zu ermitteln.

9. Femtozellen-Basisstation nach Anspruch 8, weiterhin umfassend Mittel zum Anfordern der Anmeldung bei dem Femto-Gateway, so dass bei der Verwendung der Backhaul-Verkehr an die und von der Femtozellen-Basisstation durch dieses Femto-Gateway fließt.

10. Femtozellen-Basisstation nach Anspruch 9, weiterhin umfassend Mittel, um sich von einem anderen Femto-Gateway abzumelden.

## Revendications

1. Procédé de détermination d'une zone de localisation (LA) de macrocellule au sein de laquelle réside une station de base de femtocellule, le procédé comprenant les étapes suivantes :
surveillance (154) par la station de base de femtocellule (30) des messages reçus de la part de terminaux d'utilisateur connectés par radio à la station de base de femtocellule pour détecter (156) une demande de mise à jour de la zone de localisation, la demande de mise à jour de la zone de localisation comprenant un identifiant de la zone de localisation de macrocellule à laquelle le terminal d'utilisateur était connecté en dernier avant la connexion avec la station de base de femtocellule ;
décodage (160) par la station de base de femtocellule de la demande de mise à jour de la zone de localisation pour déterminer l'identifiant de zone de localisation de macrocellule ;
dans lequel la station de base de femtocellule reçoit des demandes de mise à jour de la zone de localisation supplémentaires indiquant que la station de base de femtocellule se trouve à proximité d'autres zones de localisation de macrocellule et, sur réception desdites demandes de mise à jour de la zone de localisation supplémentaires, contrôle si la zone de localisation de macrocellule identifiée pour la station de base de femtocellule est la plus appropriée ;
**caractérisé en ce que** la station de base de femtocellule est enregistrée temporairement auprès d'une femto-passerelle ne couvrant aucune des zones de localisation identifiées dans les demandes de mise à jour de la zone de localisation, et la zone de localisation de macrocellule la plus fréquemment identifiée par les demandes de mise à jour de la zone de localisation collectées pendant cette période est sélectionnée comme celle à utiliser lors de la détermination de la femto-passerelle auprès de laquelle doit s'enregistrer la station de base de femtocellule.

2. Procédé selon la revendication 1, comprenant en outre la fourniture d'une information relationnelle (150) indiquant quelles zones de localisation de macrocellule sont couvertes par quelles femto-passerelles (230), et l'utilisation de l'identifiant de zone de localisation de macrocellule conjointement avec l'information relationnelle pour déterminer la femto-passerelle couvrant cette zone de localisation.

3. Procédé selon la revendication 2, comprenant en outre l'enregistrement de la station de base de femtocellule (Fig. 6:n) auprès de cette femto-passerelle de sorte que le trafic de raccordement entre la station de base de femtocellule et le réseau central passe par cette femto-passerelle.

4. Procédé selon la revendication 3, dans lequel la station de base de femtocellule de désenregistre (Fig. 6:r) d'une autre femto-passerelle auprès de laquelle elle était préalablement enregistrée.

5. Procédé selon la revendication 4, dans lequel la femto-passerelle auprès de laquelle la station de base de femtocellule (230) était préalablement enregistrée a été sélectionnée par la station de base de femtocellule recevant un signal de diffusion de la part d'une macrocellule et décodant le signal de diffusion reçu qui inclut un identifiant de zone de localisation de macrocellule, et consultant une liste (150) qui met en relation les identifiants de zone de localisation de macrocellule avec les femto-passerelles.

6. Procédé selon l'une quelconque des revendications précédentes, dans lequel les demandes de mise à jour de la zone de localisation sont soit des demandes de mise à jour de la zone de localisation en rapport avec le domaine à commutation de circuits (Fig. 6:b), soit des demandes de mise à jour de la zone de localisation (Fig. 7:b) en rapport avec le domaine à commutation de paquets.

7. Station de base de femtocellule comprenant un processeur pour déterminer une zone de localisation de macrocellule au sein de laquelle réside une station de base de femtocellule, le processeur comprenant :
un étage de surveillance (154) configuré pour surveiller les messages reçus de la part de terminaux d'utilisateur connectés par radio à la station de base de femtocellule pour détecter une demande de mise à jour de la zone de localisation, la demande de mise à jour de la zone de localisation comprenant un identifiant de la zone de localisation de macrocellule à laquelle le terminal d'utilisateur était connecté en dernier avant la connexion avec la station de base de femtocellule ; et
un décodeur (160) configuré pour décoder la demande de mise à jour de la zone de localisation pour déterminer l'identifiant de zone de localisation de macrocellule ;
dans lequel la station de base de femtocellule reçoit des demandes de mise à jour de la zone de localisation supplémentaires indiquant que la station de base de femtocellule se trouve à proximité d'autres zones de localisation de macrocellule et, sur réception desdites demandes de mise à jour de la zone de localisation supplémentaires, contrôle si la zone de localisation de macrocellule identifiée pour la station de base de femtocellule est la plus appropriée ;
**caractérisée en ce que** la station de base de femtocellule est enregistrée temporairement auprès d'une femto-passerelle ne couvrant aucune des zones de localisation identifiées dans les demandes de mise à jour de la zone de localisation, et la zone de localisation de macrocellule la plus fréquemment identifiée par les demandes de mise à jour de la zone de localisation collectées pendant cette période est sélectionnée comme celle à utiliser lors de la détermination de la femto-passerelle auprès de laquelle doit s'enregistrer la station de base de femtocellule.

8. Station de base de femtocellule selon la revendication 7, comprenant en outre une mémoire fournissant une information relationnelle (150) indiquant quelles zones de localisation de macrocellule sont couvertes par quelles femto-passerelles (162), et un processeur (162) configuré pour utiliser l'identifiant de zone de localisation de macrocellule conjointement avec l'information relationnelle pour déterminer la femto-passerelle couvrant cette zone de localisation.

9. Station de base de femtocellule selon la revendication 8, comprenant en outre des moyens pour demander l'enregistrement auprès de la femto-passerelle de sorte que, lors de l'utilisation, le trafic de raccordement vers et depuis la station de base de femtocellule passe par cette femto-passerelle.

10. Station de base de femtocellule selon la revendication 9, comprenant en outre des moyens pour se désenregistrer d'une autre femto-passerelle.
